(19) Europäisches Patentamt
European Patent Office
Office européen des brevets

(11) **EP 4 546 078 B1**

(12) **EUROPEAN PATENT SPECIFICATION**

(45) Date of publication and mention
of the grant of the patent:
**03.12.2025 Bulletin 2025/49**

(21) Application number: **23206247.1**

(22) Date of filing: **26.10.2023**

(51) International Patent Classification (IPC):
**G05D 23/19** (2006.01)    **F24F 11/46** (2018.01)
**F24F 11/64** (2018.01)

(52) Cooperative Patent Classification (CPC):
**G05D 23/1934; F24F 11/46; F24F 11/64; G05D 23/1917**

(54) **TEMPERATURE CONTROL SYSTEM AND METHOD**

TEMPERATURSTEUERUNGSSYSTEM UND -VERFAHREN

SYSTÈME ET PROCÉDÉ DE RÉGULATION DE TEMPÉRATURE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**30.04.2025 Bulletin 2025/18**

(73) Proprietor: **Daikin Europe N.V.**
**8400 Oostende (BE)**

(72) Inventors:
• **Zareh Eshghdoust, Mehran**
**8400 Oostende (BE)**
• **Hajihoseini, Negar**
**8400 Oostende (BE)**

• **Rosich, Albert**
**8400 Oostende (BE)**
• **Vandemergel, Kristof**
**8400 Oostende (BE)**
• **Paolella, Matteo**
**8400 Oostende (BE)**

(74) Representative: **Brantsandpatents bv**
**Pauline Van Pottelsberghelaan 24**
**9051 Ghent (BE)**

(56) References cited:
**EP-B1- 2 722 606      JP-A- 2006 336 901**
**JP-A- 2008 089 284**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Description

FIELD OF THE INVENTION

The present invention relates to a system for temperature control in one or more rooms, as well as a method for temperature control in one or more rooms.

BACKGROUND

Most temperature control systems, whether it is cooling or heating, typically run on presets, with a user-defined 'goal' temperature or preset for each room (one temperature for all rooms, or separate temperatures for all or certain rooms). The temperature control systems run on the principle that as long as the preset is not achieved, further cooling or heating is required, depending on whether the actual temperature is higher or lower than the goal temperature. While such a system is simple and easy to control, it unfortunately leads to a lot of energy waste, where the temperature control system attempts to reach the preset, but is unable to do so or severely obstructed in its operation by energy waste states. Such energy waste states can vary strongly, with relevant examples being open windows or doors, unexpected/unwanted heat and/or cold sources in the rooms, that counteract the desired temperature change (or heat change), by introducing or removing heat into or out of the room, opposed to the actions of the temperature control system.

EP 2 722 606 B1 discloses the detection of energy waste based on an estimated heat change, however this estimated heat change does not depend on the outdoor temperature.

JP 2006 336901 discloses the detection of an energy waste state. The detection is based on the load (opening degree of the expansion valve) of the air conditioner, and before to generate an alert, the historic values of the temperature set points and the outdoor temperatures are compared to the actual set points and the actual outdoor temperatures. However no estimation of a heat change is computed.

JP2008/089284 describes a simple prior art system comprising a controller which stores the amount of room temperature change per unit time during operation of the air conditioner in a room where the indoor unit of the air conditioner is installed. It then calculates a room temperature change standard value based on the stored room temperature change amount per unit time, and stops the air conditioner when the amount of room temperature change per unit time does not reach the room temperature change standard value. But, the system of JP2008/089284 does not succeed in efficiently and accurately detecting waste operation states.

The present invention aims to resolve the problem and disadvantage mentioned above.

SUMMARY OF THE INVENTION

The present invention aims to resolve at least some of the problems and disadvantages mentioned above.

To this end, the present invention relates to a system for temperature control in one or more rooms according to claim 1, as well as a method for temperature control in one or more rooms according to claim 9. Distinct embodiments are derived from the dependent claims.

According to a first aspect, the invention relates to a system for temperature control in one or more rooms, each of said one or more rooms comprising at least one temperature control unit, said temperature control unit comprising one or more heating and/or cooling units, the system comprising a supervisory controller, said supervisory controller configured for controlling operation of said temperature control units. The supervisory controller is further configured for estimating a heat change for each of said one or more rooms.

This estimated heat change is based on outdoor temperature historical data indicative of outdoor temperature over a prolonged period of time, indoor temperature historical data indicative of indoor temperature in said each of said one or more rooms over said prolonged period of time.

The supervisory controller is configured for detecting presence of an energy waste state in at least one room of the one or more rooms, based on the estimated heat change for each of said one or more rooms and a current indoor temperature for each of said one or more rooms.

The supervisory controller is configured for taking an intervention action upon detection of the presence of an energy waste state in at least one room, preferably wherein said intervention action is effected in or for said at least one room, more preferably wherein said intervention action at least comprises shutting down the temperature control unit in said at least one room wherein the presence of the energy waste state is detected.

The present system provides for a functional way to estimate a heat change for a room based on the indoor temperature historical data and outdoor temperature historical data in concert with each other. By using said historical data, projections can be made for the estimated heat change, which is aimed at identifying the projected temperature change in the first room (as a result of heat loss/heat gain in the room). Taking into account a current indoor temperature for the room, the supervisory controller can then detect the presence of an energy waste state in the room, by comparing the estimated heat change to the current indoor temperature. The above estimation is performed departing from a previous point in time with respect to the current indoor temperature to which it is compared. This way, a projection can be made for the estimated indoor temperature at the current time (current, as in the time of the most recent indoor temperature registered in the system) from said previous point in time using the estimated heat change between the previous point in time and the current time. In that sense, the current indoor temperature should be considered as the most recent indoor temperature registered in the system. Inversely, the indoor temperatures (current and previous point in time) can be used to determine an actual heat change, and this can then be compared to the estimated heat change.

If the supervisory controller detects a mismatch between the estimate and the current indoor temperature, for which no further explanation is available to the supervisory controller, then an energy waste state presence is detected.

Based on whether or not a perceived presence of an energy waste state is detected the supervisory controller can take intervention actions in the room, such as controlling the temperature control unit(s) in the room (shutting down, reducing output, ...).

The prior art, such as JP2008/089284, fails to disclose systems and associated methods wherein both indoor and outdoor temperature historical data is used to estimate the heat change, while this exactly makes it possible to build a reliable representation for the heat exchange characteristics of a room (or multiple rooms), which in turn allows estimating the heat change accurately.

In an embodiment, the estimated heat change is estimated via a formula or model based on the outdoor temperature historical data and the indoor temperature historical data, wherein said formula or model receives as input an indoor temperature of a previous point in time, said point in time preferably being at most 1 hour, more preferably at most 30 minutes, in the past.

Building the formula or model based on the historical data (indoor and outdoor temperature) requires a number of (relevant, and relatively recent) data points in each data set (indoor and outdoor). Preferably, the indoor and outdoor temperature data sets are coupled, such that each data point in a first of the two sets is linked to a data point in the other set, indicating that they were registered at (substantially) the same time. However, even if the data points are not linked, they can be used to build the formula or model, for instance by extrapolating a profile connecting the data points, and choosing appropriate points in time for which the extrapolated (indoor and/or outdoor) temperature is used.

Such a formula or model can then be used to estimate the heat change, departing from an input temperature in a period following the time of the input temperature. This estimation can come in the form of an estimated heat change profile over a certain period of time (for instance 10 minutes, 20 minutes, 30 minutes, 1 hour, 2 hours, etc.) after the time of the input temperature, said period of time extending at least up to the present time, to allow comparison to the current indoor temperature. As such, if the input temperature is from 1 hour ago, the estimate heat change profile should at least be estimated up to 1 hour from that time, i.e., the present. If the input temperature used is from 30 minutes, ago, the estimate heat change profile should at least be estimated up to 30 minutes from that time, i.e., the present.

Alternatively, it may come in the form of one or more discrete estimated heat changes at fixed periods after the time of the input temperature (for instance, at 10 minutes, at 20 minutes, at 30 minutes, at 40 minutes, etc.). This is preferably performed at least up to the present time or further thereafter. As such, if the input temperature is from 1 hour ago, the estimate heat change should at least be estimated up to 1 hour from that time, i.e., the present. If the input temperature used is from 30 minutes ago, the estimate heat change should at least be estimated up to 30 minutes from that time, i.e., the present.

Preferably, the indoor temperature that is used as input is even more recent, and is at most 20 minutes in the past, more preferably at most 15 minutes in the past, or even 10 minutes or 5 minutes in the past at most.

Using the indoor temperature of a recent previous point in time as input, allows the formula or model to be reliable, as no substantial changes should have occurred that are not yet accounted for by the formula or model (for instance, activation of a temperature control unit, impact of weather shift, etc.).

In a preferred embodiment, the formula or model for estimating the heat change is based on the following equation:

$$\dot{T}_{room} = \frac{1}{C}\left(\frac{T_{out}-T_{room}}{R} + E_h\right),$$

$C$ represents a thermal capacity of said room, $T_{room}$ represents the indoor temperature of the room, $T_{out}$ represents an current outdoor temperature, $R$ represents a thermal resistance between the room and the environment outside of said room, $E_h$ represents the energy delivered to or removed from said room by the one or more temperature control units. With energy, reference is made to the energy that is of course actually converted to heat, excluding energy used for general operation of the units or energy loss due to inefficient conversion of energy used by the units into heat. These two delivered/removed energies are typically easily derivable from (known) specifications on the temperature control units. $C$ and $R$ are derived from the indoor temperature historical data and the outdoor temperature historical data.

Using the aforementioned equation allows for a simple, but very accurate representation of the thermal characteristics of the room, which can be easily determined even based on a limited sample set of indoor and outdoor historical temperature data. The number of factors that needs to be determined is only two ($C$ and R) in the basic equation. In some cases, the energy delivered or removed by one or more of the temperature control units is not known, but again, this can be easily inferred based on the historical temperature data, especially if further information is available such as the operational status of the units at the time of the data points in the historical temperature data.

It should furthermore be noted that the energy delivered/removed from the room can be in the form of a function or model, defined by characteristics of the temperature control unit (rise time, fall time, maximal output, etc.).

In a particularly preferred embodiment, the formula or model is developed or created using Machine Learning, by training the model on available data sets. The use of Machine Learning in the present context is particularly valuable, due to the abundance of data points in the indoor and outdoor temperature historical data sets that can be taken and stored, and used for training the model, making the models more accurate and robust, and being suitable for acting in any relevant new situation.

As will be discussed further on in the description, the Machine Learning model can be expanded further by training it on other data that it takes into account.

In a further preferred embodiment, the formula or model receives as further input an outdoor temperature of a previous point in time, said point in time preferably being at most 1 hour, more preferably at most 30 minutes, in the past, preferably at the same point in time or close to the point in time of the input indoor temperature. As mentioned with respect to the current indoor temperature, it is preferable that the outdoor temperature that is used as input is more recent, and is at most 20 minutes in the past, more preferably at most 15 minutes in the past, or even 10 minutes or 5 minutes in the past at most, for the same reasons as discussed above. The substantial changes in that case are more related to sudden weather shifts, but may also come from artificial influences.

In order to ensure a reliable formula or model, the system requires sufficient data points to model the room's heat characteristics (such as natural exchange of heat with environment, influence of temperature difference with environment, impact of temperature control units, impact of presence of users, impact of presence/operation of objects and/or other features).

As such, the supervisory controller can comprise or be linked to a dedicated acquisition section for acquiring indoor temperature data via one or more indoor temperature sensors. These indoor temperature sensors can be integrated in (a local component of) the supervisory controller, and/or in the temperature control units, and/or via separate sensors from which the acquisition can collect the indoor temperature data. In the case of multiple indoor temperature sensors, an averaging step can be performed to determine a single value (arithmetic mean, geometric mean, harmonic mean, median, mode, mid-range, as well as other types of averages, optionally with filtering steps to remove discrepant values).

In the same fashion, the acquisition section acquires outdoor temperature data from outdoor temperature sensors and/or at least one external data sources. As before, the outdoor temperature sensors can be integrated in (an exterior component of) the supervisory controller, and/or in (exterior parts of) the temperature control units, and/or via separate outdoor sensors from which the acquisition can collect the outdoor temperature data. The external data sources can for instance be temperature applications, internet sources, etc.

As before, in the case of multiple outdoor temperature sensors and/or external data sources, an averaging step can be performed to determine a single value.

The (indoor and/or outdoor) temperature data is typically periodically acquired. The periods between acquisitions can range between 1 second, 10 seconds, 30 seconds, 1 minute, 5 minutes, 30 minutes, 1 hour, 2 hours, 3 hours, or even 6 hours, 12 hours, etc. Preferably, the period is kept relatively low to account for sudden temperature changes and the diurnal cycle, without needlessly storing too much data.

The temperature data is typically acquired at the same time for indoor and outdoor temperature data and coupled as such.

These acquired indoor and outdoor temperature data (points) are stored in a storage section of the supervisory controller in order to create an indoor and outdoor temperature historical data (set). The indoor and outdoor temperature historical data preferably only takes into account data points over a preceding time period with a predetermined length, so as to ignore data points in the far past that may no longer be relevant, for instance due to changes in infrastructure (isolation), environmental factors and/or others.

In order to ensure that the formula or model is accurate, it is updated and/or regenerated periodically, preferably at fixed intervals, to account for changes in the environment, in the room(s), to characteristics pertaining to the room, etc.. Regenerating the formula or model can for instance be performed every minute, every 2 minutes, every 5 minutes, every 10 minutes, every 20 minutes, every 30 minutes, every hour, every 2 hours, every 3 hours, every 6 hours or longer periods of time. The formula or model is then usually regenerated based on a more recent subset of indoor and outdoor temperature historical data, which may or may not partly overlap with the subset used for the previously generated formula or model.

In a further preferred embodiment, the formula or model is further based on temperature control unit operation historical data, said temperature control unit operation historical data defining the operation states of each temperature control unit over the prolonged period of time. One of the factors strongly impacting the heat change in a room, is the activity of temperature control units (heating units and cooling units, or combined units capable of both heating and cooling). The system, as well as the associated methodology, are very suitable for developing a model or formula for estimating a natural heat change (i.e., without any artificial or abrupt heat input or output such as temperature control units). This can be easily performed if given sufficient temperature historical data.

However, temperature control unit influence on the heat amount in a room is, while technically easy to quantity, difficult to predict, as the activation, deactivation and intermediate modes, can vary depending on presence of occupant(s), inclination of occupant, even mood or physical state, and is variable based on time of the day, as well on the day of the week, or time in the year. As such, accurate knowledge on their operational status over the prolonged period of time is crucial to supplement the natural heat change model/formula, and arrive at a more correct estimate of the heat change.

In some embodiments, the temperature control unit operation historical data does not necessarily comprise the operation states of each temperature control unit over the entire prolonged period of time, but over a recent part of it, extending up to the present, given that it can be used as a supplement for the model/formula once the dynamics of the operation states impacting the heat change can be determined, which is usually very straightforward.

As before, the use of Machine Learning can greatly improve the reliability when determining the presence of an energy waste state. By training the model with the temperature control unit operation historical data, heat gain or loss as a result of temperature control unit operation can be detected, and taken into account in the further steps.

In a further preferred embodiment, the supervisory controller is connected to each of the temperature control units and comprises an identification section configured for detecting temperature control unit operation for each of the temperature control units. Via such a direct connection, the supervisory controller can accurately and reliably acquire the data at periodic intervals.

In a preferred embodiment, at least one of the temperature control units is a heat medium circulation system comprising at least one radiator and a heat source unit, and further comprises a valve to shut off heat medium circulation in the heat medium circulation system, wherein the supervisory controller is configured for controlling said valve to control operation of said heat medium circulation system. One of the major applications for the system and methodology of the invention lies in acting on energy waste states where the temperature control unit is used for heating via heat medium circulation through a radiator. In such a case, the energy waste state detects that the estimated heat change represents a smaller heat loss or a greater heat gain than what is actually measured (compared to a certain tolerance for the difference) based on the current indoor temperature (and potentially other features, such as current outdoor temperature and the temperature control unit operation historical data, ...). If there is no cause for such a discrepancy, the invention will consider that there are unexpected heat losses, for instance due to an open window, etc., and will take action accordingly via an intervention action. One such action in particular will involve shutting down heating in the room where the energy waste state is detected, which can be performed by simply operating the valve to stop (entirely or partially) heat medium circulation to the radiator in the room where the energy waste state is detected. This way, heat medium circulation is still possible to other rooms where no energy waste state is determined.

In a preferred embodiment, at least one of the temperature control units is an air conditioning system comprising at least one compressor and at least one air conditioning unit, wherein the supervisory controller is configured for controlling the compressor to control operation of said air conditioning system.

One of the major applications for the system and methodology of the invention lies in acting on energy waste states where the temperature control unit is used for cooling via a compressor and an air conditioning unit. In such a case, the energy waste state detects that the estimated heat change represents a greater heat loss or smaller heat gain than what is actually measured (compared to a certain tolerance for the difference) based on the current indoor temperature (and potentially other features, such as current outdoor temperature and the temperature control unit operation historical data, ...). If there is no cause for such a discrepancy, the invention will consider that there is unexpected heat input, for instance due to an open window, etc., and will take action accordingly via an intervention action. One such action in particular will involve shutting down (or reducing) cooling in the room where the energy waste state is detected.

As mentioned before, a number of intervention actions are possible, and each of the intervention actions mentioned in the application can be swapped with other intervention actions mentioned specifically in any embodiment, unless specifically impossible, with said embodiments being implicitly disclosed and part of the description at hand.

In a preferred embodiment, the supervisory controller is configured for estimating a projected indoor temperature for each of the one or more rooms, said projected indoor temperature for each room being determined via the estimated heat change for said each room and the indoor temperature of said each room at a previous point in time. Preferably the previous point in time is at most 1 hour, more preferably at most 30 minutes, in the past. A presence of an energy waste state for a room is determined by a comparison of said projected indoor temperature and a current indoor temperature of said room.

As mentioned before, using a more recent previous point in time is preferable, as this ensures the reliability. While the model and formula may be reliable, as with all estimates, projections and predictions, the extent to which they can diverge from the actual increases as the point in time for which the estimate is performed, lies further in the future with respect to the previous point in time. A more recent baseline, reduces the amount with which the result can diverge.

As such, the previous point in time is preferably at most 20 minutes in the past, more preferably at most 15 minutes in the past, or even 10 minutes or 5 minutes in the past at most.

In a preferred embodiment, the controller confirms a presence of an energy waste state if the indoor temperature of one of said one or more rooms is more than 0.5 °C below a setpoint temperature for said one of said one or more rooms for at least 5 minutes.

In an alternative embodiment, preferably combined with the above, the controller confirms a presence of an energy waste state if the indoor temperature of one of said one or more rooms is more than 1.0 °C above a setpoint temperature for said one of said one or more rooms for at least 5 minutes.

In the present embodiments, a rule-based confirmation of presence of an energy waste state is employed, with a fixed threshold both in terms of minimal discrepancy, and in terms of a minimal period in time for which the discrepancy persists. This allows an easy straightforward way to judge situations. It should however be noted that the above rule can be complemented with other rules, dynamic or fixed.

Preferably, the minimal temperature difference between the room and the setpoint temperature is at least 0.75°C, more preferably at least 1.00°C, more preferably at least 1.25°C, more preferably at least 1.50°C, more preferably at least 1.75°C, even more preferably at least 2.00°C, even more preferably at least 2.25°C, even more preferably at least 2.50°C, even more preferably at least 2.75°C, even more preferably at least 3.00°C, even more preferably at least 3.50°C, even more preferably at least 4.00°C, even more preferably at least 4.50°C, and even more preferably at least 5.00°C.

Preferably, the minimal time period for which the threshold is crossed, is at least 6 minutes, preferably at least 7 minutes, preferably at least 8 minutes, preferably at least 9 minutes, preferably at least 10 minutes, more preferably at least 12 minutes, more preferably at least 14 minutes, more preferably at least 16 minutes, more preferably at least 18 minutes, more preferably at least 20 minutes, even more preferably at least 25 minutes, even more preferably at least 30 minutes, even more preferably at least 40 minutes, 50 minutes or 60 minutes.

In a preferred embodiment, the supervisory controller is configured for determining an actual heat change for at least one of said one or more rooms. This actual heat change is based on the indoor temperature historical data, optionally on said outdoor temperature historical data, and further based on the current indoor temperature in said at least one of said one or more rooms. By using previous (a) indoor temperature historical data (point) and the current indoor temperature, the actual heat change can be determined. Using the outdoor temperature historical data can increase the accuracy thereof.

In a preferred embodiment, the presence of the energy waste state is detected if the actual heat change for a room exceeds or goes below the estimated heat change for the room by at least a predefined absolute or relative margin, preferably over at least a predefined minimal time period.

Preferably, the presence is only detected (in the sense of confirmed and to be acted upon) in case the actual heat change exceeds or goes below the estimated heat change for a minimal period of time, preferably said minimal period of time as defined earlier, i.e., at least 5 minutes, at least 6 minutes, preferably at least 7 minutes, preferably at least 8 minutes, preferably at least 9 minutes, preferably at least 10 minutes, more preferably at least 12 minutes, more preferably at least 14 minutes, more preferably at least 16 minutes, more preferably at least 18 minutes, more preferably at least 20 minutes, even more preferably at least 25 minutes, even more preferably at least 30 minutes, even more preferably at least 40 minutes, 50 minutes or 60 minutes. This way, 'false' alarms can be avoided, wherein a glitch in a sensor, a short, sudden temperature increase (person touching the sensor, for instance), or similar temporary discrepancies can be filtered out, without an intervention action being taken.

The predefined relative margin is preferably at least 1% (temperatures in degrees Celsius), more preferably at least 1.5%, more preferably at least 2.0%, even more preferably at least 2.5%, even more preferably at least 3.0%, even more preferably at least 3.5%, even more preferably at least 4.0%, even more preferably at least 4.5%, even more preferably at least 5.0%, even more preferably at least 5.5%, even more preferably at least 6.0%, even more preferably at least 6.5%, even more preferably at least 7.0%, even more preferably at least 7.5%, even more preferably at least 8.0%, even more preferably at least 8.5%, even more preferably at least 9.0%, even more preferably at least 9.5%, and even more preferably at least 10.0%, or even at least 11%, 12%, 13%, 14%, 15% or more, such as at least 17.5%, 20%, 22.5%, 25% or 30%.

In a preferred embodiment, the supervisory controller is configured for determining an actual heat change for each of said one or more rooms. The actual heat change is based on the indoor temperature historical data, optionally the outdoor temperature historical data, and is further based on the current indoor temperature in each of the one or more rooms.

In most cases, the system and methodology will be applied in multi-room buildings, allowing it to make maximal use of its potential. However, this adds the complexity that heat change is not always due to a heat exchange with the outside environment, for which the outdoor temperature is used to determine the heat exchange (temperature difference strongly defines the conduction process). In multi-room configurations, the heat change can be the result of a heat exchange with neighboring rooms, where in exchanges with some of the other rooms, there may be a heat loss, and in others, there may be a heat gain.

By providing this data to the system (and associated methodology), this effect can be taken into account. The exact physics does not need to be modeled exactly to take this effect into account (as that would require extensive knowledge such as shared wall area, thickness, materials, etc.), but the model or formula can infer the influence from different indoor temperatures at the other rooms if provided sufficient data points in the data sets (indoor temperature historical data for each room, along with the outdoor temperature historical data). This means that the configuration (knowledge on which room borders which) is not necessarily known or required as input, as a lack of influence will also be reflected in the historical data.

In a further preferred embodiment, where the actual heat change is determined for each of the rooms, the presence of the energy waste state is detected if the actual heat change for one of said rooms exceeds or goes below the estimated heat change for said one of said rooms by at least a predefined absolute or relative margin, and preferably over a predefined minimal time period, as discussed previously.

In a preferred embodiment, the supervisory controller is responsible for temperature control in multiple rooms, wherein the supervisory controller when detecting presence of an energy waste state, is configured to take into account the heat change of each of said rooms to identify heat transfer between two or more of said multiple rooms.

Allowing the supervisory controller to take into account internal heat transfer(s), between two or more of the rooms, can further assist to clarify whether or not an actual energy waste state is occurring. By being able to differentiate such internal heat transfers from actual heat losses or heat gains to or from the outside, the system and methodology allows to take actions only when this is necessary, instead of acting on a point of view with isolated rooms.

This does not mean however that heat transfer between rooms is always entirely (or partly) ignored for detection of energy waste states. In some cases, it can be ignored, for instance where certain rooms are prone for a greater heat gain or loss than others (for instance, in case only certain rooms have a heating unit and/or a cooling unit, while others don't), and the heat transfer is in fact aimed at compensating this and balancing out. In such cases, only heat change where the heat is exchanged with exterior locations than the rooms is considered for determining the presence of an energy waste state, and if intervention actions are to be taken.

In some embodiments, the heat transfer to or from another room is also considered as part of the heat change of said room, and an energy waste state can be determined on the net heat change for the room.

In some embodiments, the heat transfer to or from another room is considered separately from the heat change of said room, wherein this separate heat transfer to or from other rooms can result in the determination of the presence of an energy waste state (even if there is no indication of an abnormal heat change with respect to the outside), resulting in intervention action(s) to be taken in the room itself and/or in the room(s) with which the heat transfer takes place that lead to the determination of the presence of an energy waste state.

As before, the use of Machine Learning can greatly improve the reliability when determining the presence of an energy waste state. By training the model with the data sets for each room, heat transfer between rooms can be detected, and taken into account in the further steps.

In a preferred embodiment, the intervention action is one or more of: alerting a human operator, deactivating one or more of the temperature control units, preferably at least the temperature control unit in the room for which the energy waste state is detected, reducing temperature control operation of one or more of the temperature control units, submitting a suggested deactivation or reduced temperature control operation of one or more of the temperature control units to a human operator for approval.

The above intervention actions can be chained as subsequent actions in particular orders. Each subsequent intervention action is then undertaken depending on further circumstances, such as an increasing divergence from the estimated heat change with the reality, a lack of convergence, slow convergence, etc., over a particular period of time. In some actions, approval is asked from a human operator, in which case a subsequent action could also be taken if no response comes from the operator within a certain period of time.

Further intervention actions can for instance lie in controlling certain home appliances or domotics, such as automatically shutting windows, doors, closing blinds or shutters.

In a preferred embodiment, the indoor temperature historical data and the outdoor temperature historical data is collected over a single measurement period. Using a single measurement period ensures that the data points are connected and show the variation of the temperature over time, and will be very relevant for constructing a model/formula that estimates the heat change over time. In this sense, it is important that the data is registered for sufficiently long measurement periods, to ensure that there are enough data points and enough variation in them to be able to allow construction of the model/formula.

In an alternatively preferred embodiment, the indoor temperature historical data and/or the outdoor temperature historical data is collected over a plurality of temporally separate measurement periods. It should be noted that the data sets thus comprise subsets for the separate measurement periods, wherein each subset however will still be a collection of multiple data points over time in said separate measurement periods, in order to determine the dynamics of the temperature in the room(s).

Using multiple measurement periods provides the advantage that the situations in the measurement periods may differ (different temperature outside, operational heating units, room occupation by people, sunny outside, etc.), giving a wider view on the dynamics of the temperature, and the effects of such different situations. This allows the model or formula that is built, to be able to handle different situations with a higher reliability on the estimated heat change (not only the different situations from the different measurement periods, but via extrapolation and interpolation also many variations).

In an embodiment, the indoor temperature historical data and/or the outdoor temperature historical data is periodically updated or replaced. Preferably both are updated or replaced in accordance with each other, as ideally, linked data points (indoor and outdoor temperature at essentially the same time). Updating or replacing in accordance with each other refers to the linked data points being both updated/replaced, or otherwise removed. Periodical updates, replacement and/or removal of data points ensure that the retained data points are relevant for the situation, and that old, obsolete data points no longer pollute the data sets, for instance in cases where structural changes modified the room(s) to an extent that old data is no longer representative.

In other embodiments, the indoor temperature historical data and/or the outdoor temperature historical data is preserved, such that the estimated heat change is based on ever-growing data sets. This ensures that the estimate is performed with intricate knowledge of a great variety of different situations, such that an accurate estimate is guaranteed.

Specifically when using Machine Learning to train a model, it is highly advantageous to have a vast data set representing a high diversity of situations. This is typically the result of collecting data points over a longer period of time (as long as possible). While the data can be pruned periodically, this does not necessarily needs to be done as a standard, and can be for instance the consequence of human actions (an operator 'resetting' the system; automated resets by the system based on anomalous differences between the estimated heat change and the actual heat change; prompts by the system for an operator-initiated reset based on such anomalous differences).

In a preferred embodiment, the supervisory controller detects the presence of an energy waste state based on an error function, defined by the following formula: $pred_{error}(t) = E_{loss_{real}}(t) - E_{loss_{simple}}(t)$. In this formula, $E_{loss_{real}}(t)$ is an actual energy change in each room, and $E_{loss_{simple}}(t)$ is the estimated energy change in each room, further taking into account generated heat from the temperature control unit in said each room, and wherein the presence of an energy waste state is determined for a room based on a cumulative sum control chart (CUSUM) value of the error function, wherein if said CUSUM value exceeds a predetermined upper bound or if a predetermined lower bound exceeds said CUSUM value, the presence of an energy waste state is confirmed.

Most preferably, the actual and estimated energy change ($E_{loss_{real}}(t)$, $E_{loss_{simple}}(t)$) is the actual and estimated heat change ($Q_{loss_{real}}(t)$, $Q_{loss_{simple}}(t)$).

Using a cumulative sum of the difference between the estimated and actual values, ensures that temporary fluctuations will not trigger an intervention action (for instance, hot or cold object pressing against a temperature sensor, obstruction of air flow, etc.). Instead, such temporary fluctuations may even out in the cumulative sum (opposite fluctuation partly cancels out original fluctuation), or they will be put in perspective as part of the cumulative sum where a single higher deviation results in a small or medium average deviation over the entire cumulative sum.

According to a second aspect, the invention relates to a method for temperature control in one or more rooms, each of said one or more rooms comprising at least one temperature control unit, comprising the following steps:

a. estimating a heat change for each of said one or more rooms, wherein said estimated heat change is based on outdoor temperature historical data indicative of outdoor temperature over a prolonged period of time, indoor temperature historical data indicative of indoor temperature in said each of said one or more rooms over said prolonged period of time;

b. detecting presence of an energy waste state in at least one room of the one or more rooms, based on the estimated heat change for each of said one or more rooms and a current indoor temperature for each of said one or more rooms;

c. taking an intervention action upon detection of the presence of an energy waste state in at least one room, preferably wherein said intervention action is effected in or for said at least one room, more preferably wherein said intervention action at least comprises shutting down the temperature control unit in said at least one room wherein the presence of the energy waste state is detected.

The advantages mentioned for the system according to the invention are equally applicable to the above method, as well as the embodiments that follow. Furthermore, it should be noted that any embodiments mentioned for the system are equally transferable as embodiments for the method, and should be considered as implicitly disclosed herein.

In a preferred embodiment, estimating the heat change is performed via a formula or model based on the outdoor temperature historical data and the indoor temperature historical data, wherein said formula or model receives as input an indoor temperature of a previous point in time. Preferably, the previous point in time is at most 1 hour, more preferably at most 30 minutes, in the past.

Preferably, the indoor temperature that is used as input is even more recent, and is at most 20 minutes in the past, more preferably at most 15 minutes in the past, or even 10 minutes or 5 minutes in the past at most.

In a particularly preferred embodiment, the formula or model is developed or created using Machine Learning, by training the model on available data sets. The use of Machine Learning in the present context is particularly valuable, due to the abundance of data points in the indoor and outdoor temperature historical data sets that can be taken and stored, and used for training the model, making the models more accurate and robust, and being suitable for acting in any relevant new situation.

As will be discussed further on in the description, the Machine Learning model can be expanded further by training it on other data that it takes into account.

In a preferred embodiment, the formula or model receives as further input an outdoor temperature of a previous point in time. Preferably said previous point in time is at most 1 hour in the past, preferably at most 30 minutes in the past. Preferably, said previous point in time is at the same point in time or close to the previous point in time of the input indoor temperature as discussed above. As mentioned with respect to the current indoor temperature, it is preferable that the outdoor temperature that is used as input is more recent, and is at most 20 minutes in the past, more preferably at most 15 minutes in the past, or even 10 minutes or 5 minutes in the past at most, for the same reasons as discussed above. The substantial changes in that case are more related to sudden weather shifts, but may also come from artificial influences.

In order to ensure that the formula or model is accurate, it is updated and/or regenerated periodically, preferably at fixed intervals, to account for changes in the environment, in the room(s), to characteristics pertaining to the room, etc.. Regenerating the formula or model can for instance be performed every minute, every 2 minutes, every 5 minutes, every 10 minutes, every 20 minutes, every 30 minutes, every hour, every 2 hours, every 3 hours, every 6 hours or longer periods of time. The formula or model is then usually regenerated based on a more recent subset of indoor and outdoor temperature historical data, which may or may not partly overlap with the subset used for the previously generated formula or model.

In a preferred embodiment, the formula or model is further based on temperature control unit operation historical data, said temperature control unit operation historical data defining the operation states of each temperature control unit over the prolonged period of time.

As before, the use of Machine Learning can greatly improve the reliability when determining the presence of an energy waste state. By training the model with the temperature control unit operation historical data, heat gain or loss as a result of temperature control unit operation can be detected, and taken into account in the further steps.

In a preferred embodiment, at least one of the temperature control units is a heat medium circulation system comprising at least one radiator and a heat source unit, and further comprises a valve to shut off heat medium circulation in the heat medium circulation system, wherein the valve is controlled based on the detection of an energy waste state in the room of the radiator, thereby controlling operation of said heat medium circulation system. One of the major applications for the system and methodology of the invention lies in acting on energy waste states where the temperature control unit is used for heating via heat medium circulation through a radiator. In such a case, the energy waste state detects that the estimated heat change represents a smaller heat loss or a greater heat gain than what is actually measured (compared to a certain tolerance for the difference) based on the current indoor temperature (and potentially other features, such as current outdoor temperature and the temperature control unit operation historical data, ...). If there is no cause for such a discrepancy, the invention will consider that there are unexpected heat losses, for instance due to an open window, etc., and will take action accordingly via an intervention action. One such action in particular will involve shutting down heating in the room where the energy waste state is detected, which can be performed by simply operating the valve to stop (entirely or partially) heat medium circulation to the radiator in the room where the energy waste state is detected. This way, heat medium circulation is still possible to other rooms where no energy waste state is determined.

In a preferred embodiment, at least one of the temperature control units is an air conditioning system comprising at least one compressor and at least one air conditioning unit, wherein the compressor is controlled based on detection of an energy waste state in the room of the air conditioning unit, in order to control operation of said air conditioning system.

One of the major applications for the system and methodology of the invention lies in acting on energy waste states where the temperature control unit is used for cooling via a compressor and an air conditioning unit. In such a case, the energy waste state detects that the estimated heat change represents a greater heat loss or smaller heat gain than what is actually measured (compared to a certain tolerance for the difference) based on the current indoor temperature (and potentially other features, such as current outdoor temperature and the temperature control unit operation historical data, ...). If there is no cause for such a discrepancy, the invention will consider that there is unexpected heat input, for instance due to an open window, etc., and will take action accordingly via an intervention action. One such action in particular will involve shutting down (or reducing) cooling in the room where the energy waste state is detected.

In a preferred embodiment, the method comprises the step of estimating a projected indoor temperature for each of the one or more rooms, said projected indoor temperature for each room being determined via the estimated heat change for said each room and the indoor temperature of said each room at a previous point in time. Preferably, said point in time is at most 1 hour in the past, more preferably at most 30 minutes in the past. A presence of an energy waste state for a room is determined by a comparison of said projected indoor temperature and a current indoor temperature of said room. The presence of the energy waste state is detected if the current indoor temperature for a room exceeds or goes below the projected indoor temperature for the room by at least a predefined absolute or relative margin, preferably for at least a predefined minimal time period, which was discussed previously.

The predefined absolute margin is preferably at least 0.5°C, preferably at least 0.75°C, more preferably at least 1.00°C, more preferably at least 1.25°C, more preferably at least 1.50°C, more preferably at least 1.75°C, even more preferably at least 2.00°C, even more preferably at least 2.25°C, even more preferably at least 2.50°C, even more preferably at least 2.75°C, even more preferably at least 3.00°C, even more preferably at least 3.50°C, even more preferably at least 4.00°C, even more preferably at least 4.50°C, and even more preferably at least 5.00°C.

The predefined relative margin is preferably at least 1% (temperatures in degrees Celsius), more preferably at least 1.5%, more preferably at least 2.0%, even more preferably at least 2.5%, even more preferably at least 3.0%, even more preferably at least 3.5%, even more preferably at least 4.0%, even more preferably at least 4.5%, even more preferably at least 5.0%, even more preferably at least 5.5%, even more preferably at least 6.0%, even more preferably at least 6.5%, even more preferably at least 7.0%, even more preferably at least 7.5%, even more preferably at least 8.0%, even more preferably at least 8.5%, even more preferably at least 9.0%, even more preferably at least 9.5%, and even more preferably at least 10.0%, or even at least 11%, 12%, 13%, 14%, 15% or more, such as at least 17.5%, 20%, 22.5%, 25% or 30%.

As mentioned before, using a more recent previous point in time is preferable, as this ensures the reliability. While the model and formula may be reliable, as with all estimates, projections and predictions, the extent to which they can diverge from the actual increases as the point in time for which the estimate is performed, lies further in the future with respect to the previous point in time. A more recent baseline, reduces the amount with which the result can diverge.

As such, the previous point in time is preferably at most 20 minutes in the past, more preferably at most 15 minutes in the past, or even 10 minutes or 5 minutes in the past at most.

In a preferred embodiment, a presence of an energy waste state is confirmed if the indoor temperature of one of said one or more rooms is more than 0.5 °C below a setpoint temperature for said one of said one or more rooms for at least 5 minutes. In an alternative embodiment, preferably combined with the above, a presence of an energy waste state is confirmed if the indoor temperature of one of said one or more rooms is more than 1.0 °C above a setpoint temperature for said one of said one or more rooms for at least 5 minutes.

In the present embodiments, a rule-based confirmation of presence of an energy waste state is employed, with a fixed threshold both in terms of minimal discrepancy, and in terms of a minimal period in time for which the discrepancy persists. This allows an easy straightforward way to judge situations. It should however be noted that the above rule can be complemented with other rules, dynamic or fixed.

Preferably, the minimal temperature difference between the room and the setpoint temperature is at least 0.75°C, more preferably at least 1.00°C, more preferably at least 1.25°C, more preferably at least 1.50°C, more preferably at least 1.75°C, even more preferably at least 2.00°C, even more preferably at least 2.25°C, even more preferably at least 2.50°C, even more preferably at least 2.75°C, even more preferably at least 3.00°C, even more preferably at least 3.50°C, even more preferably at least 4.00°C, even more preferably at least 4.50°C, and even more preferably at least 5.00°C.

Preferably, the minimal time period for which the threshold is crossed, is at least 6 minutes, preferably at least 7 minutes, preferably at least 8 minutes, preferably at least 9 minutes, preferably at least 10 minutes, more preferably at least 12 minutes, more preferably at least 14 minutes, more preferably at least 16 minutes, more preferably at least 18 minutes, more preferably at least 20 minutes, even more preferably at least 25 minutes, even more preferably at least 30 minutes, even more preferably at least 40 minutes, 50 minutes or 60 minutes.

In a preferred embodiment, the method comprises the step of determining an actual heat change for at least one of said one or more rooms. This actual heat change is based on the indoor temperature historical data, optionally on said outdoor temperature historical data, and further based on the current indoor temperature in said at least one of said one or more rooms. By using previous (a) indoor temperature historical data (point) and the current indoor temperature, the actual heat change can be determined. Using the outdoor temperature historical data can increase the accuracy thereof.

In a preferred embodiment, the presence of the energy waste state is detected if the actual heat change for a room exceeds or goes below the estimated heat change for the room by at least a predefined absolute or relative margin, which was discussed previously.

As before, the presence is preferably only detected if the actual heat change for a room exceeding or going below the estimated heat change persists for at least a predefined minimal time period, which was discussed previously.

In a preferred embodiment, the method comprises a step of determining an actual heat change for each of said one or more rooms. The actual heat change is based on the indoor temperature historical data, optionally the outdoor temperature historical data, and is further based on the current indoor temperature in each of the one or more rooms.

In most cases, the system and methodology will be applied in multi-room buildings, allowing it to make maximal use of its potential. However, this adds the complexity that heat change is not always due to a heat exchange with the outside environment, for which the outdoor temperature is used to determine the heat exchange (temperature difference strongly defines the conduction process). In multi-room configurations, the heat change can be the result of a heat exchange with neighboring rooms, where in exchanges with some of the other rooms, there may be a heat loss, and in others, there may be a heat gain.

By providing this data to the system (and associated methodology), this effect can be taken into account. The exact physics does not need to be modeled exactly to take this effect into account (as that would require extensive knowledge such as shared wall area, thickness, materials, etc.), but the model or formula can infer the influence from different indoor temperatures at the other rooms if provided sufficient data points in the data sets (indoor temperature historical data for each room, preferably along with the outdoor temperature historical data). This means that the configuration (knowledge on which room borders which) is not necessarily known or required as input, as a lack of influence will also be reflected in the historical data.

In a preferred embodiment, the intervention action is one or more of: alerting a human operator, deactivating one or more of the temperature control units, preferably at least the temperature control unit in the room for which the energy waste state is detected, reducing heating operation of one or more of the temperature control units, submitting a suggested deactivation or reduced temperature control operation of one or more of the temperature control units to a human operator for approval.

The above intervention actions can be chained as subsequent actions in particular orders. Each subsequent intervention action is then undertaken depending on further circumstances, such as an increasing divergence from the estimated heat change with the reality, a lack of convergence, slow convergence, etc., over a particular period of time. In some actions, approval is asked from a human operator, in which case a subsequent action could also be taken if no response comes from the operator within a certain period of time.

Further intervention actions can for instance lie in controlling certain home appliances or domotics, such as automatically shutting windows, doors, closing blinds or shutters.

In a preferred embodiment, the indoor temperature historical data and the outdoor temperature historical data is collected over a single measurement period. Using a single measurement period ensures that the data points are connected and show the variation of the temperature over time, and will be very relevant for constructing a model/formula that estimates the heat change over time. In this sense, it is important that the data is registered for sufficiently long measurement periods, to ensure that there are enough data points and enough variation in them to be able to allow construction of the model/formula.

In an alternatively preferred embodiment, the indoor temperature historical data and/or the outdoor temperature historical data is collected over a plurality of temporally separate measurement periods. It should be noted that the data sets thus comprise subsets for the separate measurement periods, wherein each subset however will still be a collection of multiple data points over time in said separate measurement periods, in order to determine the dynamics of the temperature in the room(s).

In an embodiment, the indoor temperature historical data and/or the outdoor temperature historical data is periodically updated or replaced. Preferably both are updated or replaced in accordance with each other, as ideally, linked data points (indoor and outdoor temperature at essentially the same time). Updating or replacing in accordance with each other refers to the linked data points being both updated/replaced, or otherwise removed. Periodical updates, replacement and/or removal of data points ensure that the retained data points are relevant for the situation, and that old, obsolete data points no longer pollute the data sets, for instance in cases where structural changes modified the room(s) to an extent that old data is no longer representative.

In other embodiments, the indoor temperature historical data and/or the outdoor temperature historical data is preserved, such that the estimated heat change is based on ever-growing data sets. This ensures that the estimate is performed with intricate knowledge of a great variety of different situations, such that an accurate estimate is guaranteed.

Specifically when using Machine Learning to train a model, it is highly advantageous to have a vast data set representing a high diversity of situations. This is typically the result of collecting data points over a longer period of time (as long as possible). While the data can be pruned periodically, this does not necessarily needs to be done as a standard, and can be for instance the consequence of human actions (an operator 'resetting' the system; automated resets by the system based on anomalous differences between the estimated heat change and the actual heat change; prompts by the system for an operator-initiated reset based on such anomalous differences).

In a preferred embodiment, presence of an energy waste state is detected based on an error function, defined by the following formula: $pred_{error}(t) = E_{loss_{real}}(t) - E_{loss_{simple}}(t)$. In the formula, $E_{loss_{real}}(t)$ is an actual energy change in each room and $E_{loss_{simple}}(t)$ is the estimated energy change in each room. The formula further takes into account generated heat from the temperature control unit in said each room. The method furthermore comprises a step of determining the presence of an energy waste state for a room based on a cumulative sum control chart (CUSUM) value of the error function, wherein if said CUSUM value exceeds a predetermined upper bound or if a predetermined lower bound exceeds said CUSUM value, the presence of an energy waste state is confirmed.

Using a cumulative sum of the difference between the estimated and actual values, ensures that temporary fluctuations will not trigger an intervention action (for instance, hot or cold object pressing against a temperature sensor, obstruction of air flow, etc.). Instead, such temporary fluctuations may even out in the cumulative sum (opposite fluctuation partly cancels out original fluctuation), or they will be put in perspective as part of the cumulative sum where a single higher deviation results in a small or medium average deviation over the entire cumulative sum.

## DESCRIPTION OF FIGURES

**Fig. 1** shows a flow chart for an embodiment of the invention using energy waste state detection via employment of the CUSUM method on the available data.

**Fig. 2A and 2B** respectively show a method for training, and deploying a Machine Learning model (neural network in this case), for waste energy state detection according to an embodiment of the invention.

## DETAILED DESCRIPTION OF THE INVENTION

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:

"Temperature control unit" as used herein refers one or more (same-type, jointly operated) units suitable for heating and/or cooling a room or location. The method of cooling and heating can vary, and can amongst others take the form of introduction of heated or cooled air (or another medium), via thermal radiation (radiator/convector), and others.

"Room" as used herein, refers to a largely spatially separated volume, which is substantially sealed from its surroundings by heat-insulating physical barriers, such as walls, windows, doors, etc. The qualifier "first" or "second" or any other, is merely to differentiate between the rooms, but any statements or embodiments that are described regarding a first room, are equally applicable to any other room.

"Indoor/outdoor temperature historical data" as used herein refers to a data set comprising a plurality of data points representing past indoor/outdoor temperature measurements, along with an associated time (relative or absolute). These measurements are preferably taken on a periodical basis, with fixed intervals, but this is not necessarily the case. The data points can be processed to remove anomalous data points, which can be rule-based. The data sets can be rolling data sets, which discard the oldest data points as new data points come in, or can cover a fixed time period (for instance, all data points of the last X hours). The indoor and outdoor temperature historical data is most preferably linked, in that each data point of one set is linked to one data point of the other set, and to an associated time (relative or absolute).

"Data" or "data set" refers to one of the data sets mentioned as a shorthand, or may refer to a combination of multiple of said data sets, as will be evident in the context in which it is used.

"A", "an", and "the" as used herein refers to both singular and plural referents unless the context clearly dictates otherwise. By way of example, "a compartment" refers to one or more than one compartment.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any $\geq 3, \geq 4, \geq 5, \geq 6$ or $\geq 7$ etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

The supervisory controller may comprise one or more processing units or modules (e.g. a central processing unit (CPU) such as a microprocessor, or a suitably programmed field programmable gate array (FPGA) or application-specific integrated circuit (ASIC)). Additionally, or alternatively, the supervisory controller may be provided with any memory sections necessary to perform its function of controlling operation of the heat pump system. Such memory sections may be provided as part of (comprised in) the supervisory controller (e.g., integrally formed or provided on the same chip) or provided separately, but electrically connected to the supervisory controller. By way of example, the memory sections may comprise both volatile and non-volatile memory resources, including, for example, a working memory (e.g. a random access memory). In addition, the memory sections may include an instruction store (e.g. a ROM in the form of an electrically-erasable programmable read-only memory (EEPROM) or flash memory) storing a computer program comprising computer-readable instructions which, when executed by the supervisory controller, cause the supervisory controller to perform various functions described herein.

The supervisory controller may be wiredly connected to the temperature control units (or subsections thereof, for instance, to a boiler or valves connecting the boiler to a radiator, but not necessarily to each subsection), and/or may be wirelessly connected to the temperature control units, with a local controller on the temperature control units (or again, subsections thereof) that communicates wirelessly with the supervisory controller.

**EXAMPLES**

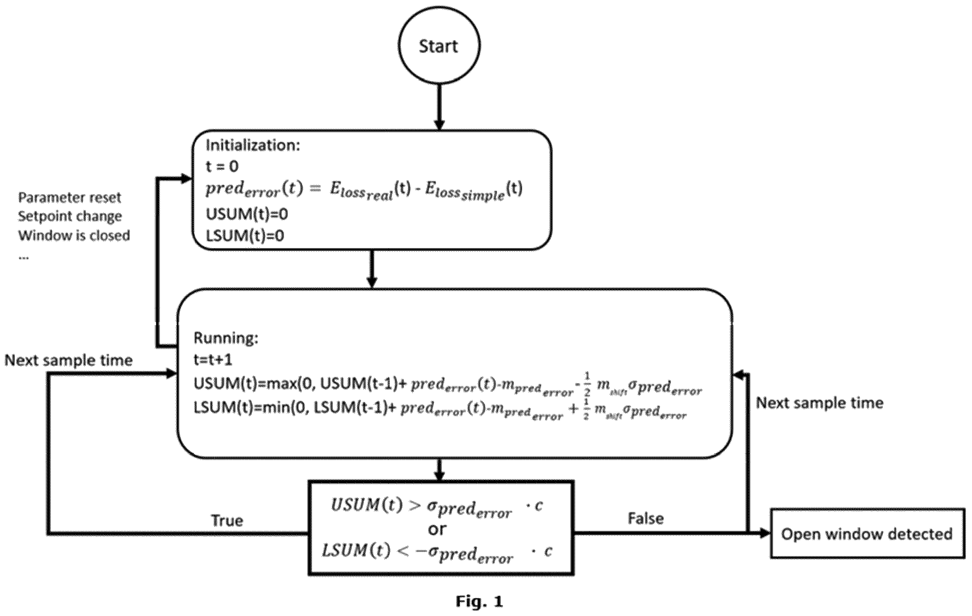

Fig. 1 shows a flow chart for an embodiment wherein the energy waste state is detected by using the CUSUM method on the available data. In Fig. 1, the energy waste state is described as "open window detected", but it is clear to the skilled person that this is simply an example.

The CUSUM method is a statistical process control technique that is used to monitor the behavior of a process over time, and detect when the process deviates from its expected behavior. In the context of this system for detecting energy waste states, the CUSUM method is used to monitor a prediction error of the energy loss for each room. The prediction error can be calculated as the difference between:

- $E_{loss_{simple}}(t)$: the predicted energy loss in each room, estimated based on the one-step ahead prediction of the indoor temperatures via the simple model;
- $E_{loss_{real}}(t)$: the actual energy loss in each room, estimated from the indoor temperature actually measured by sensors,

Based on the room temperatures, the actual energy loss can be calculated as follows:

$$E_{loss_{real}}(t) = \frac{T_{out} - T_{room}}{R}$$ , with R the estimated thermal resistance of a room, $T_{out}$ the outdoor temperature and $T_{room}$ the indoor temperature.

The CUSUM method works by calculating a running sum of the prediction error for the energy loss in each room. When an energy waste state is present (for instance, an open window, in a situation where the outside temperature is different from the indoor temperature), the prediction error will increase, as the simple model is fitted to represent the thermal behaviour of a room without the energy waste state.

The calculation for the CUSUM itself can be performed as follows:

For a time sequence the following prediction errors are measured periodically, and stored: $pred_{error}(1)$, $pred_{error}(2)$, $pred_{error}(3)$, ... ,$pred_{error}(n)$ with estimated average $m_{pred_{error}}$ and estimated standard deviation $\sigma_{pred_{error}}$.

Upper and lower cumulative process sums are defined using: $pred_{error}(t) = E_{loss_{real}}(t) - E_{loss_{simple}}(t)$

$$\text{If } t = 0:$$

$$USUM(t) = 0$$
$$LSUM(t) = 0$$

$$\text{if } t > 0:$$

$$USUM(t) = max(0, USUM(t-1) + pred_{error}(t) - m_{pred_{error}}$$

$$- (\frac{1}{2} m_{shift}\ \sigma_{pred_{error}})$$

$$LSUM(t) = min(0, LSUM(t-1) + pred_{error}(t) - m_{pred_{error}} + (\frac{1}{2} m_{shift}\ \sigma_{pred_{error}})$$

A shift point (i.e., energy waste state presence) is then detected when:

$$USUM(t) > \sigma_{pred_{error}}\ c$$

or

$$LSUM(t) \ < \ -\sigma_{pred_{error}} c$$

In the above,

- t is a timestep
- $m_{pred_{error}}$ is the estimated 'average' of the difference between the estimated and actual $E_{loss}$ (can be calculated for at least 50 timesteps when we know energy waste states are absent), this compensates systematic offsets in the prediction error (e.g., constant bias of prediction error independent of presence of energy waste state).
- $\sigma_{pred_{error}}$ is the estimated standard deviation of the difference between the estimated and actual $E_{loss}$ (can be calculated for at least 50 timesteps when we know energy waste states are absent). This parameter affects the value of USUM and LSUM and the shift-point criterium.
- $m_{shift}$ is the minimum mean shift to detect (default value: 1)
- c is the control limit (default value: 5). This parameter determines the shift point threshold. A lower value results in a more sensitive detector, a higher value in a more robust detector.

In some variations, heuristics can be added, such as only allowing energy waste states to be determined/confirmed if the indoor temperature moves opposite to a setpoint. More preferably, it is restricted to situations where the indoor temperature is decreasing, as the most common energy waste states relate to heat loss, and are most important to counteract due to the high amounts of energy waste.

Other heuristics can be a predetermined minimal period of time for which the energy waste state is determined, for instance at least 5 minutes.

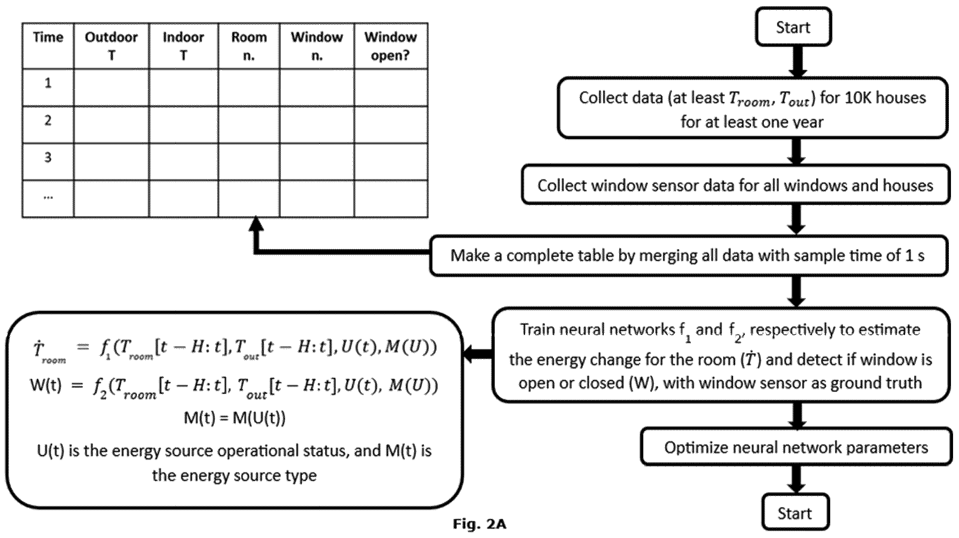

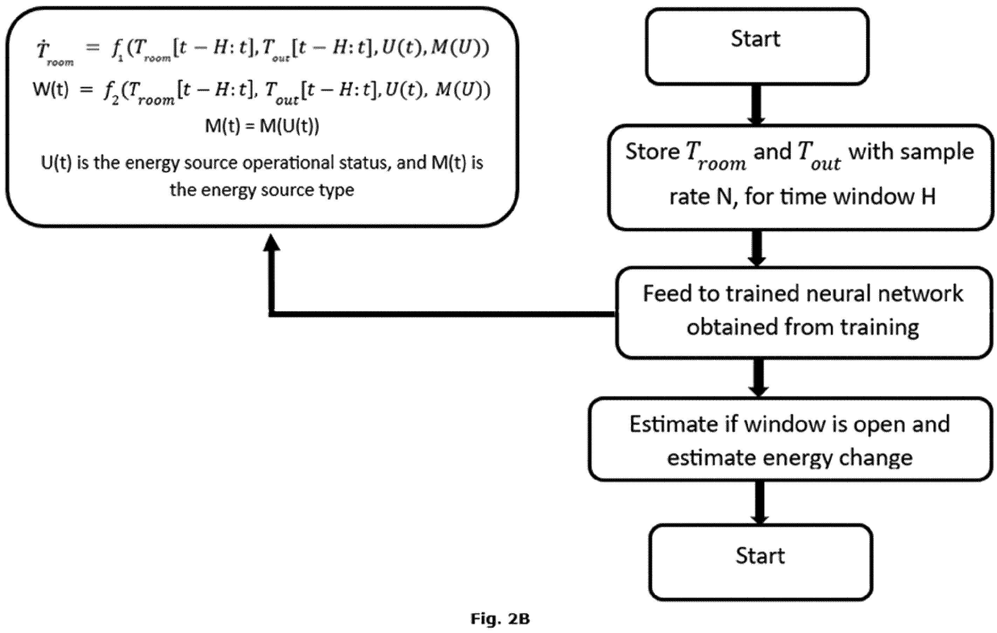

Fig. 2A and 2B show a method for training (Fig. 2A), and deploying (Fig. 2B) a Machine Learning model (neural network in this case), for waste energy state detection according to an embodiment of the invention.

In a first stage described in Fig. 2A, indoor and outdoor temperature data is collected for a large number (10.000) houses (although this can likewise be performed, or combined with, other types of buildings, such as offices, shops, etc.) over at least 1 year for each house. In order to receive a relevant data set, it is important that the houses for which the data is collected are varied in terms of location, orientation, isolation, window size, window numbers, shadowed, .... The windows of the houses (or at least some) are provided with sensor to determine their state (open or closed, as 1 or 0), for each of the windows with a sensor and associated to rooms for which an indoor temperature is determined. The data from these sensors is also collected and linked to the indoor and outdoor temperature data collected over the year. The sample time can be chosen at 1 second in this case, although other options remain open. The available data is combined into a table where for each point in time, and for each window the indoor temperature data (for the room of the window) and outdoor temperature data is provided.

Based on this table, a first neural network ($f_1$) is trained to estimate the energy/heat change for the room ($\dot{T}$). A second neural network ($f_2$) is trained to determine the presence (or absence) of an energy waste state, in this case an open window (W). The window sensor data is used as a ground truth for both networks. Typically, further details can be added to the networks (via the table, or separately), specifically information on the operational state of temperature control units in the rooms, and if available, the output thereof (and optionally the energy source type). The type of neural network can vary, for instance recurrent neural networks (RNN), such as a Long Short-Term Memory (LSTM) network, or a convolutional neural network (CNN), Generative Adversarial network (GAN), Transformer neural network, such as Temporal Fusion Transformer (TFT), etc.

Subsequently, the neural network parameters are optimized, for instance the look-back time (H, indicating the period of time over which indoor and outdoor temperature historical data, and other data is used by the model), sampling time (N), number of layers used, neurons on each layer, etc.

Ultimately, an acceptable model is reached, and deployed, as seen in Fig. 2B) under the optimized parameters. Of course, even during deployment, further optimizations based on new input continues. When deployed, the trained first and second neural network receive indoor for each room and outdoor temperature data (outside of said room), with a sample rate N (optimized) and a look back time (H), and based on this received data, can estimate the energy waste state (is the window open or not), and can estimate the energy/heat change.

In the above examples, reference is mainly made to situations where there is a heat loss to the outside environment, but the extension of the principle to heat gain from the outside environment, and the repercussion thereof on the above examples is clear for the skilled person.

**Claims**

1. A system for temperature control in one or more rooms, each of said one or more rooms comprising at least one temperature control unit, said temperature control unit comprising one or more heating and/or cooling units, the system comprising a supervisory controller, said supervisory controller configured for controlling operation of said temperature control units,

   wherein said supervisory controller is configured for estimating a heat change for each of said one or more rooms, said estimated heat change based on outdoor temperature historical data indicative of outdoor temperature over a prolonged period of time, indoor temperature historical data indicative of indoor temperature in said each of said one or more rooms over said prolonged period of time;
   wherein said supervisory controller is configured for detecting presence of an energy waste state in at least one room of the one or more rooms, based on the estimated heat change for each of said one or more rooms and a current indoor temperature for each of said one or more rooms;
   wherein said supervisory controller is configured for taking an intervention action upon detection of the presence of an energy waste state in at least one room, preferably wherein said intervention action is effected in or for said at least one room, more preferably wherein said intervention action at least comprises shutting down the temperature control unit in said at least one room wherein the presence of the energy waste state is detected.

2. System for temperature control according to the preceding claim 1, wherein the estimated heat change is estimated via a formula or model based on the outdoor temperature historical data and the indoor temperature historical data, wherein said formula or model receives as input an indoor temperature of a previous point in time, said point in time preferably being at most 1 hour, more preferably at most 30 minutes, in the past.

3. System for temperature control according to the preceding claim 2, wherein said formula or model receives as further input an outdoor temperature of a previous point in time, said point in time preferably being at most 1 hour, more preferably at most 30 minutes, in the past, preferably at the same point in time or close to the point in time of the input indoor temperature.

4. System for temperature control according to the preceding claim 2 or 3, wherein said formula or model is further based on temperature control unit operation historical data, said temperature control unit operation historical data defining the operation states of each temperature control unit over the prolonged period of time.

5. System for temperature control according to any one of the preceding claims 1 to 4, wherein the supervisory controller is configured for estimating a projected indoor temperature for each of the one or more rooms, said projected indoor temperature for each room being determined via the estimated heat change for said each room and the indoor temperature of said each room at a previous point in time, said point in time preferably being at most 1 hour, more preferably at most 30 minutes, in the past, and
   wherein a presence of an energy waste state for a room is determined by a comparison of said projected indoor temperature and a current indoor temperature of said room.

6. System for temperature control according to any one of the preceding claims 1 to 5, wherein said supervisory controller is further configured for determining an actual heat change for each of said one or more rooms, said actual heat change based on said indoor temperature historical data, optionally said outdoor temperature historical data, and further based on the current indoor temperature in said each of said one or more rooms.

7. System for temperature control according to any one of the preceding claims 1 to 6, wherein said supervisory controller is further configured for determining an actual heat change for each of said one or more rooms,

   said actual heat change based on said indoor temperature historical data, optionally said outdoor temperature historical data, and further based on the current indoor temperature in said each of said one or more rooms, wherein the supervisory controller is responsible for temperature control in multiple rooms, wherein the supervisory controller when detecting presence of an energy waste state, is configured to take into account the heat change of each of said rooms to identify heat transfer between two or more of said multiple rooms.

8. System for temperature control according to any one of the preceding claims 1 to 7, wherein the supervisory controller detects the presence of an energy waste state based on an error function, defined by the following formula:

$$pred_{error}(t) = E_{loss_{real}}(t) - E_{loss_{simple}}(t);$$

wherein $E_{loss_{real}}(t)$ is an actual heat change, and $E_{loss_{simple}}(t)$ is the estimated heat change in each room, further taking into account generated heat from the temperature control unit in said each room, and wherein the presence of an energy waste state is determined for a room based on a cumulative sum control chart (CUSUM) value of the error function, wherein if said CUSUM value exceeds a predetermined upper bound or if a predetermined lower bound exceeds said CUSUM value, the presence of an energy waste state is confirmed.

9. Method for temperature control in one or more rooms, each of said one or more rooms comprising at least one temperature control unit, comprising the following steps:

a. estimating a heat change for each of said one or more rooms, wherein said estimated heat change is based on outdoor temperature historical data indicative of outdoor temperature over a prolonged period of time, indoor temperature historical data indicative of indoor temperature in said each of said one or more rooms over said prolonged period of time;
b. detecting presence of an energy waste state in at least one room of the one or more rooms, based on the estimated heat change for each of said one or more rooms and a current indoor temperature for each of said one or more rooms;
c. taking an intervention action upon detection of the presence of an energy waste state in at least one room, preferably wherein said intervention action is effected in or for said at least one room, more preferably wherein said intervention action at least comprises shutting down the temperature control unit in said at least one room wherein the presence of the energy waste state is detected.

10. Method according to the preceding claim 9, wherein estimating the heat change is performed via a formula or model based on the outdoor temperature historical data and the indoor temperature historical data, wherein said formula or model receives as input an indoor temperature of a previous point in time, said point in time preferably being at most 1 hour, more preferably at most 30 minutes, in the past.

11. Method according to the preceding claim 10, wherein said formula or model receives as further input an outdoor temperature of a previous point in time, said point in time preferably being at most 1 hour, more preferably at most 30 minutes, in the past, preferably at the same point in time or close to the point in time of the input indoor temperature.

12. Method according to the preceding claim 10 or 11, wherein said formula or model is further based on temperature control unit operation historical data, said temperature control unit operation historical data defining the operation states of each temperature control unit over the prolonged period of time.

13. Method according to any one of the preceding claims 10 to 12, comprising a step of:
estimating a projected indoor temperature for each of the one or more rooms, said projected indoor temperature for each room being determined via the estimated heat change for said each room and the indoor temperature of said each room at a previous point in time, said point in time preferably being at most 1 hour, more preferably at most 30 minutes, in the past,
wherein a presence of an energy waste state for a room is determined by a comparison of said projected indoor temperature and a current indoor temperature of said room.

14. Method according to any one of the preceding claims 10 to 13, further comprising a step of:
determining an actual heat change for each of said one or more rooms, said actual heat change based on said indoor temperature historical data, optionally said outdoor temperature historical data, and further based on the current indoor temperature in said each of said one or more rooms.

15. Method according to any one of the preceding claims 10 to 14, wherein presence of an energy waste state is detected based on an error function, defined by the following formula: $pred_{error}(t) = E_{loss_{real}}(t) - E_{loss_{simple}}(t)$; wherein $E_{loss_{real}}(t)$ is an actual heat change and $E_{loss_{simple}}(t)$ is the estimated heat change in each room,

wherein the formula further takes into account generated heat from the temperature control unit in said each room, and
the method comprising a step of:

determining the presence of an energy waste state for a room based on a cumulative sum control chart (CUSUM) value of the error function, wherein if said CUSUM value exceeds a predetermined upper bound or if a predetermined lower bound exceeds said CUSUM value, the presence of an energy waste state is confirmed.

**Patentansprüche**

1. System zur Temperatursteuerung in einem oder mehreren Räumen, wobei jeder des einen oder der mehreren Räume eine Temperatursteuereinheit umfasst, wobei die Temperatursteuereinheit eine oder mehrere Heiz- und/oder Kühleinheiten umfasst, wobei das System eine aufsichtsführende Steuerung umfasst, wobei die aufsichtsführende Steuerung zum Steuern des Betriebes der Temperatursteuereinheiten konfiguriert ist,

wobei die aufsichtsführende Steuerung dafür konfiguriert ist, eine Wärmeänderung für jeden des einen oder der mehreren Räume zu schätzen,
wobei die geschätzte Temperaturänderung auf historischen Daten zu einer Außentemperatur, die eine Außentemperatur über eine längere Zeitspanne angeben, und auf historischen Daten zu einer Innentemperatur, die eine Innentemperatur in jedem des einen oder der mehreren Räume über die längere Zeitspanne angeben, basiert,
wobei die aufsichtsführende Steuerung dafür konfiguriert ist, basierend auf der geschätzten Wärmeänderung für jeden des einen oder der mehreren Räume und einer aktuellen Innentemperatur für jeden des einen oder der mehreren Räume das Vorhandensein eines Energievergeudungszustandes in mindestens einem Raum des einen oder der mehreren Räume zu erkennen,
wobei die aufsichtsführende Steuerung dafür konfiguriert ist, auf das Erkennen des Vorhandensein eines Energievergeudungszustandes in mindestens einem Raum hin eine Eingriffsaktion vorzunehmen, wobei die Eingriffsaktion vorzugsweise in dem oder für den mindestens einen Raum bewirkt wird, wobei die Eingriffsaktion bevorzugter mindestens das Abschalten der Temperatursteuereinheit in dem mindestens einen Raum umfasst, in dem das Vorhandensein des Energievergeudungszustandes erkannt wurde.

2. System zur Temperatursteuerung nach dem vorhergehenden Anspruch **1,** wobei die geschätzte Wärmeänderung mittels einer Formel oder eines Modells basierend auf den historischen Daten zur Außentemperatur und den historischen Daten zur Innentemperaturgeschätzt wird, wobei die Formel oder das Modell als Eingabe eine Innentemperatur eines früheren Zeitpunkts empfängt, wobei der Zeitpunkt vorzugsweise höchstens 1 Stunde, bevorzugter höchstens 30 Minuten zurückliegt.

3. System zur Temperatursteuerung nach dem vorhergehenden Anspruch 2, wobei die Formel oder das Modell als weitere Eingabe eine Außentemperatur eines früheren Zeitpunkts empfängt, wobei der Zeitpunkt vorzugsweise höchstens 1 Stunde, bevorzugter höchstens 30 Minuten zurückliegt, vorzugsweise zum gleichen Zeitpunkt oder nahe dem Zeitpunkt der Innentemperatureingabe.

4. System zur Temperatursteuerung nach dem vorhergehenden Anspruch 2 oder 3, wobei die Formel oder das Modell ferner auf historischen Daten des Betriebes der Temperatursteuereinheit basiert, wobei die historischen Daten des Betriebes der Temperatursteuereinheit die Betriebszustände jeder Temperatursteuereinheit während der längeren Zeitspanne definieren.

5. System zur Temperatursteuerung nach einem der vorhergehenden Ansprüche 1 bis 4, wobei die aufsichtsführende Steuerung dafür konfiguriert ist, eine veranschlagte Innentemperatur für jeden des einen oder der mehreren Räume zu schätzen, wobei die veranschlagte Innentemperatur für jeden Raum mittels der geschätzten Wärmeänderung für den Raum und der Innentemperatur jedes Raums zu einem früheren Zeitpunkt bestimmt wird, wobei der Zeitpunkt vorzugsweise höchstens 1 Stunde, bevorzugter höchstens 30 Minuten zurückliegt, und
wobei ein Vorhandensein eines Energievergeudungszustandes für einen Raum durch einen Vergleich der veranschlagten Innentemperatur und einer aktuellen Innentemperatur des Raumes bestimmt wird.

6. System zur Temperatursteuerung nach einem der vorhergehenden Ansprüche 1 bis 5, wobei die aufsichtsführende Steuerung ferner dafür konfiguriert ist, eine tatsächliche Wärmeänderung für jeden des einen oder der mehreren Räume zu bestimmen,
wobei die tatsächliche Wärmeänderung auf den historischen Daten zur Innentemperatur, optional auf den historischen Daten zur Außentemperatur basiert und ferner auf der aktuellen Innentemperatur in jedem des einen oder der mehreren Räume basiert.

**7.** System zur Temperatursteuerung nach einem der vorhergehenden Ansprüche 1 bis 6, wobei die aufsichtsführende Steuerung ferner dafür konfiguriert ist, eine tatsächliche Wärmeänderung für jeden des einen oder der mehreren Räume zu bestimmen,

wobei die tatsächliche Wärmeänderung auf den historischen Daten zur Innentemperatur, optional auf den historischen Daten zur Außentemperatur basiert und ferner auf der aktuellen Innentemperatur in jedem des einen oder der mehreren Räume basiert,
wobei die aufsichtsführende Steuerung für die Temperatursteuerung in mehreren Räumen zuständig ist, wobei die aufsichtsführende Steuerung dafür konfiguriert ist, die Wärmeänderung in jedem der Räume zu berücksichtigen, wenn das Vorhandensein eines Energievergeudungszustandes erkannt wird, um eine Wärmeübertragung zwischen zwei oder mehr der mehreren Räume zu identifizieren.

**8.** System zur Temperatursteuerung nach einem der vorhergehenden Ansprüche 1 bis 7, wobei die aufsichtsführende Steuerung das Vorhandensein eines Energievergeudungszustandes basierend auf einer Fehlerfunktion erkennt, die durch die folgende Formel definiert ist: $pred_{error}(t) = E_{loss_{real}}(t) - E_{loss_{simple}}(t)$;
wobei $E_{loss_{real}}(t)$ eine tatsächliche Wärmeänderung ist und $E_{loss_{simple}}(t)$ die geschätzte Wärmeänderung in jedem Raum ist, die von der Temperatursteuereinheit erzeugte Wärme in jedem Raum berücksichtigend, und wobei das Vorhandensein eines Energievergeudungszustandes für einen Raum basierend auf einem Wert einer kumulativen Summe (CUSUM) der Fehlerfunktion bestimmt wird, wobei das Vorhandensein eines Energievergeudungszustandes bestätigt wird, wenn der CUSUM-Wert eine festgelegte Obergrenze übersteigt oder wenn eine festgelegte Untergrenze den CUSUM-Wert übersteigt.

**9.** Verfahren zur Temperatursteuerung in einem oder mehreren Räumen, wobei jeder des einen oder der mehreren Räume mindestens eine Temperatursteuereinheit umfasst, die folgenden Schritte umfassend:

a. Schätzen einer Wärmeänderung für jeden des einen oder der mehreren Räum, wobei die geschätzte Temperaturänderung auf historischen Daten zu einer Außentemperatur, die eine Außentemperatur über eine längere Zeitspanne angeben, und auf historischen Daten zu einer Innentemperatur, die eine Innentemperatur in jedem des einen oder der mehreren Räume über die längere Zeitspanne angeben, basiert,
b. Erkennen des Vorhandenseins eines Energievergeudungszustandes in mindestens einem Raum des einen oder der mehreren Räume, basierend auf der geschätzten Wärmeänderung für jeden des einen oder der mehreren Räume und einer aktuellen Innentemperatur für jeden des einen oder der mehreren Räume,
c. Vornehmen einer Eingriffsaktion auf das Erkennen des Vorhandenseins eines Energievergeudungszustandes in mindestens einem Raum hin, wobei die Eingriffsaktion vorzugsweise in dem oder für den mindestens einen Raum bewirkt wird, wobei die Eingriffsaktion bevorzugter mindestens das Abschalten der Temperatursteuereinheit in dem mindestens einen Raum umfasst, in dem das Vorhandensein des Energievergeudungszustandes erkannt wurde.

**10.** Verfahren nach dem vorhergehenden Anspruch 9, wobei das Schätzen der Wärmeänderung mittels einer Formel oder eines Modells basierend auf den historischen Daten zur Außentemperatur und den historischen Daten zur Innentemperatur durchgeführt wird, wobei die Formel oder das Modell als Eingabe eine Innentemperatur eines früheren Zeitpunkts empfängt, wobei der Zeitpunkt vorzugsweise höchstens 1 Stunde, bevorzugter höchstens 30 Minuten zurückliegt.

**11.** Verfahren nach dem vorhergehenden Anspruch 10, wobei die Formel oder das Modell als weitere Eingabe eine Außentemperatur eines früheren Zeitpunkts empfängt, wobei der Zeitpunkt vorzugsweise höchstens 1 Stunde, bevorzugter höchstens 30 Minuten zurückliegt, vorzugsweise zum gleichen Zeitpunkt oder nahe dem Zeitpunkt der Innentemperatureingabe.

**12.** Verfahren nach dem vorhergehenden Anspruch 10 oder 11, wobei die Formel oder das Modell ferner auf historischen Daten des Betriebes der Temperatursteuereinheit basiert, wobei die historischen Daten des Betriebes der Temperatursteuereinheit die Betriebszustände jeder Temperatursteuereinheit während der längeren Zeitspanne definieren.

**13.** Verfahren nach einem der vorhergehenden Ansprüche 10 bis 12, folgenden Schritt umfassend:

Schätzen einer veranschlagten Innentemperatur für jeden des einen oder der mehreren Räume, wobei die veranschlagte Innentemperatur für jeden Raum mittels der geschätzten Wärmeänderung für den Raum und der Innentemperatur jedes Raums zu einem früheren Zeitpunkt bestimmt wird, wobei der Zeitpunkt vorzugsweise höchstens 1 Stunde, bevorzugter höchstens 30 Minuten zurückliegt,

wobei ein Vorhandensein eines Energievergeudungszustandes für einen Raum durch einen Vergleich der veranschlagten Innentemperatur und einer aktuellen Innentemperatur des Raumes bestimmt wird.

**14.** Verfahren nach einem der vorhergehenden Ansprüche 10 bis 13, ferner folgenden Schritt umfassend:

Bestimmen einer tatsächlichen Wärmeänderung für jeden des einen oder der mehreren Räume, wobei die tatsächliche Wärmeänderung auf den historischen Daten zur Innentemperatur, optional auf den historischen Daten zur Außentemperatur basiert und ferner auf der aktuellen Innentemperatur in jedem des einen oder der mehreren Räume basiert.

**15.** Verfahren nach einem der vorhergehenden Ansprüche 10 bis 14, wobei das Vorhandensein eines Energievergeudungszustandes basierend auf einer Fehlerfunktion erkannt wird, die durch die folgende Formel definiert ist: $pred_{error}(t) = E_{loss_{real}}(t) - E_{loss_{simple}}(t)$;

wobei $E_{loss_{real}}(t)$ eine tatsächliche Wärmeänderung ist und $E_{loss_{simple}}(t)$ die geschätzte Wärmeänderung in jedem Raum ist,

wobei die Formel ferner die von der Temperatursteuereinheit erzeugte Wärme in jedem Raum berücksichtigt, und wobei das Verfahren folgenden Schritt umfasst:

Bestimmen des Vorhandenseins eines Energievergeudungszustandes für einen Raum, basierend auf einem Wert einer kumulativen Summe (CUSUM) der Fehlerfunktion, wobei das Vorhandensein eines Energievergeudungszustandes bestätigt wird, wenn der CUSUM-Wert eine festgelegte Obergrenze übersteigt oder wenn eine festgelegte Untergrenze den CUSUM-Wert übersteigt.

## Revendications

**1.** Système de régulation de température dans une ou plusieurs pièces, chacune de ladite ou desdites pièces comprenant au moins une unité de régulation de température, ladite unité de régulation de température comprenant une ou plusieurs unités de chauffage et/ou de refroidissement, le système comprenant un contrôleur de surveillance, ledit contrôleur de surveillance étant configuré pour commander le fonctionnement desdites unités de régulation de température,

dans lequel ledit contrôleur de surveillance est configuré pour estimer un changement thermique pour chacune de ladite ou desdites pièces,

ledit changement thermique estimé étant basé sur des données historiques de température extérieure indiquant la température extérieure sur une période de temps prolongée, des données historiques de température intérieure indiquant la température intérieure dans chacune de ladite ou desdites pièces sur ladite période de temps prolongée ;

dans lequel ledit le contrôleur de surveillance est configuré pour détecter la présence d'un état de gaspillage d'énergie dans au moins une pièce parmi la ou les pièces, sur la base du changement thermique estimé pour chacune de ladite ou desdites pièces et d'une température intérieure actuelle pour chacune de ladite ou desdites pièces ;

dans lequel ledit le contrôleur de surveillance est configuré pour prendre une mesure d'intervention après avoir détecté la présence d'un état de gaspillage d'énergie dans au moins une pièce, de préférence dans lequel ladite mesure d'intervention est effectuée dans ou pour ladite au moins une pièce, plus préférentiellement dans lequel ladite mesure d'intervention comprend au moins l'arrêt de l'unité de régulation de température dans ladite au moins une pièce où la présence de l'état de gaspillage d'énergie a été détectée.

**2.** Système de régulation de température selon la revendication 1 précédente, dans lequel le changement thermique estimé est estimé au moyen d'une formule ou d'un modèle basé sur des données historiques de la température extérieure et des données historiques de la température intérieure, dans lequel ladite formule ou ledit modèle reçoit comme entrée une température intérieure d'un moment antérieur, ledit moment étant de préférence d'au plus une heure, plus préférentiellement d'au plus 30 minutes, dans le passé.

**3.** Système de régulation de température selon la revendication précédente 2, dans lequel ladite formule ou ledit modèle reçoit comme entrée supplémentaire une température extérieure d'un moment antérieur, ledit moment étant de préférence d'au plus une heure, plus préférentiellement d'au plus 30 minutes, dans le passé, de préférence au même moment ou à un moment proche du moment de la température intérieure d'entrée.

**4.** Système de régulation de température selon la revendication précédente 2 ou 3, dans lequel ladite formule ou ledit modèle est en outre basé sur des données historiques de fonctionnement d'unité de régulation de température, lesdites données historiques de fonctionnement d'unité de régulation de température définissant les états de fonctionnement de chaque unité de régulation de température au cours de la période de temps prolongée.

**5.** Système de régulation de température selon l'une quelconque des revendications précédentes 1 à 4, dans lequel le contrôleur de surveillance est configuré pour estimer une température intérieure projetée pour chacune de la ou des pièces, ladite température intérieure projetée pour chaque pièce étant déterminée par le changement thermique estimé pour chaque dite pièce et la température intérieure de chaque dite pièce à un moment antérieur, ledit moment étant de préférence d'au plus d'une heure, plus préférentiellement d'au plus 30 minutes, dans le passé., et dans lequel une présence d'un état de gaspillage d'énergie pour une pièce est déterminée par une comparaison de ladite température intérieure projetée et de la température intérieure actuelle de ladite pièce.

**6.** Système de régulation de température selon l'une quelconque des revendications précédentes 1 à 5, dans lequel ledit contrôleur de surveillance est en outre configuré pour déterminer un changement thermique réel pour chacune de ladite ou desdites pièces,
ledit changement thermique réel étant basé sur lesdites données historiques de température intérieure, éventuellement lesdites données historiques de température extérieure, et basé en outre sur la température intérieure actuelle dans chacune de ladite ou desdites pièces.

**7.** Système de régulation de température selon l'une quelconque des revendications précédentes 1 à 6, dans lequel ledit contrôleur de surveillance est en outre configuré pour déterminer un changement thermique réel pour chacune de ladite ou desdites pièces,

ledit changement thermique réel étant basé sur lesdites données historiques de température intérieure, éventuellement lesdites données historiques de température extérieure, et basé en outre sur la température intérieure actuelle dans chacune de ladite ou desdites pièces,
dans lequel le contrôleur de surveillance est en charge de la régulation de température dans de multiples pièces,
dans lequel le contrôleur de surveillance, lorsqu'il détecte la présence d'un état de gaspillage d'énergie, est configuré pour prendre en compte le changement thermique de chacune desdites pièces afin d'identifier le transfert de chaleur entre deux desdites multiples pièces ou plus.

**8.** Système de régulation de température selon l'une quelconque des revendications précédentes 1 à 7, dans lequel le contrôleur de surveillance détecte la présence d'un état de gaspillage d'énergie sur la base d'une fonction d'erreur, définie par la formule suivante : $pred_{error}(t) = E_{loss_{real}}(t) - E_{loss_{simple}}(t)$;
où $E_{loss_{real}}(t)$ est un changement thermique réel, et $E_{loss_{simple}}(t)$ est le changement thermique estimé dans chaque pièce, en tenant compte en outre de la chaleur générée par l'unité de régulation de température dans chaque dite pièce, et dans lequel la présence d'un état de gaspillage d'énergie est déterminée pour une pièce sur la base d'une valeur de carte de contrôle des sommes cumulées (CUSUM) de la fonction d'erreur, dans lequel si ladite valeur CUSUM dépasse une limite supérieure prédéterminée ou si une limite inférieure prédéterminée dépasse ladite valeur CUSUM, la présence d'un état de gaspillage d'énergie est confirmée.

**9.** Procédé de régulation de température dans une ou plusieurs pièces, chacune de ladite ou desdites pièces comprenant au moins une unité de régulation de température, comprenant les étapes suivantes :

a. l'estimation d'un changement thermique pour chacune de ladite ou desdites pièces, dans lequel ledit changement thermique estimé est basé sur des données historiques de température extérieure indiquant la température extérieure sur une période de temps prolongée, des données historiques de température intérieure indiquant la température intérieure dans chacune de ladite ou desdites pièces sur ladite période de temps prolongée ;
b. la détection de la présence d'un état de gaspillage d'énergie dans au moins une pièce parmi la ou les pièces, sur la base du changement thermique estimé pour chacune de ladite ou desdites pièces et d'une température intérieure actuelle pour chacune de ladite ou desdites pièces ;
c. la prise d'une mesure d'intervention après avoir détecté la présence d'un état de gaspillage d'énergie dans au moins une pièce, de préférence dans lequel ladite mesure d'intervention est effectuée dans ou pour ladite au moins une pièce, plus préférentiellement dans lequel ladite mesure d'intervention comprend au moins l'arrêt de l'unité de régulation de température dans ladite au moins une pièce où la présence de l'état de gaspillage d'énergie a été détectée.

**10.** Procédé selon la revendication 9 précédente, dans lequel l'estimation du changement thermique est effectuée au moyen d'une formule ou d'un modèle basé sur les données historiques de température extérieure et les données historiques de température intérieure, dans lequel ladite formule ou ledit modèle reçoit comme entrée une température intérieure d'un moment antérieur, ledit moment étant de préférence d'au plus une heure, plus préférentiellement d'au plus 30 minutes, dans le passé.

**11.** Procédé selon la revendication précédente 10, dans lequel ladite formule ou ledit modèle reçoit comme entrée supplémentaire une température extérieure d'un moment antérieur, ledit moment étant de préférence d'au plus une heure, plus préférentiellement d'au plus 30 minutes, dans le passé, de préférence au même moment ou à un moment proche du moment de la température intérieure d'entrée.

**12.** Procédé selon la revendication précédente 10 ou 11, dans lequel ladite formule ou ledit modèle est en outre basé sur des données historiques de fonctionnement d'unité de régulation de température, lesdites données historiques de fonctionnement d'unité de régulation de température définissant les états de fonctionnement de chaque unité de régulation de température au cours de la période de temps prolongée.

**13.** Procédé selon l'une quelconque des revendications précédentes 10 à 12, comprenant une étape consistant à :
estimer une température intérieure projetée pour chacune de la ou des pièces, ladite température intérieure projetée pour chaque pièce étant déterminée par le changement thermique estimé pour chaque dite pièce et la température intérieure de chaque dite pièce à un moment antérieur, ledit moment étant de préférence d'au plus d'une heure, plus préférentiellement d'au plus 30 minutes, dans le passé,
dans lequel une présence d'un état de gaspillage d'énergie pour une pièce est déterminée par une comparaison de ladite température intérieure projetée et de la température intérieure actuelle de ladite pièce.

**14.** Procédé selon l'une quelconque des revendications précédentes 10 à 13, comprenant en outre une étape consistant à :
déterminer un changement thermique réel pour chacune de ladite ou desdites pièces, ledit changement thermique réel étant basé sur lesdites données historiques de température intérieure, éventuellement lesdites données historiques de température extérieure, et basé en outre sur la température intérieure actuelle dans chacune de ladite ou desdites pièces,

**15.** Procédé selon l'une quelconque des revendications précédentes 10 à 14, dans lequel la présence d'un état de gaspillage d'énergie est détectée sur la base d'une fonction d'erreur, définie par la formule suivante : $pred_{error}(t) = E_{loss_{real}}(t) - E_{loss_{simple}}(t)$;

où $E_{loss_{real}}(t)$ est un changement thermique réel et $E_{loss_{simple}}(t)$ est le changement thermique estimé dans chaque pièce,
dans lequel la formule prend également en compte la chaleur générée par l'unité de régulation de température dans chaque dite pièce, et
le procédé comprenant une étape consistant à :

déterminer la présence d'un état de gaspillage d'énergie pour une pièce sur la base d'une valeur de carte de contrôle des sommes cumulées (CUSUM) de la fonction d'erreur, dans lequel si ladite valeur CUSUM dépasse une limite supérieure prédéterminée ou si une limite inférieure prédéterminée dépasse ladite valeur CUSUM, la présence d'un état de gaspillage d'énergie est confirmée.

Start

Initialization:
t = 0
$pred_{error}(t) = E_{loss_{real}}(t) - E_{loss_{simple}}(t)$
USUM(t)=0
LSUM(t)=0

Parameter reset
Setpoint change
Window is closed
...

Next sample time

Running:
t=t+1
$USUM(t)=\max(0, USUM(t-1)+ pred_{error}(t)-m_{pred_{error}}-\frac{1}{2} m_{shift}\sigma_{pred_{error}}$
$LSUM(t)=\min(0, LSUM(t-1)+ pred_{error}(t)-m_{pred_{error}} + \frac{1}{2} m_{shift}\sigma_{pred_{error}}$

Next sample time

$USUM(t) > \sigma_{pred_{error}} \cdot c$
or
$LSUM(t) < -\sigma_{pred_{error}} \cdot c$

True

False

Open window detected

**Fig. 1**

| Time | Outdoor T | Indoor T | Room n. | Window n. | Window open? |
|------|-----------|----------|---------|-----------|--------------|
| 1 | | | | | |
| 2 | | | | | |
| 3 | | | | | |
| ... | | | | | |

Start

Collect data (at least $T_{room}$, $T_{out}$) for 10K houses for at least one year

Collect window sensor data for all windows and houses

Make a complete table by merging all data with sample time of 1 s

Train neural networks $f_1$ and $f_2$, respectively to estimate the energy change for the room ($\dot{T}$) and detect if window is open or closed (W), with window sensor as ground truth

Optimize neural network parameters

Start

$$\dot{T}_{room} = f_1(T_{room}[t-H:t], T_{out}[t-H:t], U(t), M(U))$$
$$W(t) = f_2(T_{room}[t-H:t], T_{out}[t-H:t], U(t), M(U))$$
$$M(t) = M(U(t))$$

U(t) is the energy source operational status, and M(t) is the energy source type

**Fig. 2A**

$$\dot{T}_{room} = f_1(T_{room}[t-H:t], T_{out}[t-H:t], U(t), M(U))$$

$$W(t) = f_2(T_{room}[t-H:t], T_{out}[t-H:t], U(t), M(U))$$

$$M(t) = M(U(t))$$

U(t) is the energy source operational status, and M(t) is the energy source type

Start

Store $T_{room}$ and $T_{out}$ with sample rate N, for time window H

Feed to trained neural network obtained from training

Estimate if window is open and estimate energy change

Start

EP 4 546 078 B1

**Fig. 2B**

**EP 4 546 078 B1**

**Patent documents cited in the description**

- EP 2722606 B1
- JP 2006336901 A
- JP 2008089284 A